# EUROPÄISCHE PATENTSCHRIFT

(11) **EP 2 859 265 B1**
(45) Veröffentlichungstag und Bekanntmachung des Hinweises auf die Patenterteilung: **06.07.2016**
(21) Anmeldenummer: 13720920.1
(22) Anmeldetag: 02.05.2013
(51) Int. Cl.: F16L 3/26, F16L 59/135, F16L 3/10

(54) **KÄLTEISOLIERTES ROHRLAGER**
THERMALLY INSULATED PIPE RACK
SUPPORT DE TUYAU ISOLÉ DU FROID

(30) Priorität: 12.06.2012 DE 102012209764
(43) Veröffentlichungstag der Anmeldung: 15.04.2015
(73) Patentinhaber: Lisega SE, 27404 Zeven (DE)
(72) Erfinder: MEYER, Lüder, 27412 Tarmstedt (DE); SENKPIEL, Florian, 27404 Zeven (DE)
(74) Vertreter: Lippert, Stachow & Partner
(86) Internationale Anmeldenummer: PCT/EP2013/059153
(87) Internationale Veröffentlichungsnummer: WO 2013/185977

(56) Entgegenhaltungen:
- DE-A1-102005 013 728
- DE-A1-102009 008 140
- US-A- 5 192 039
- US-A1- 2005 253 024

## Beschreibung

Die Erfindung betrifft ein kälteisoliertes Rohrlager für eine Rohrleitung, insbesondere für eine Tieftemperaturrohrleitung, mit einem dem Querschnitt der Rohrleitung angepassten, durchgehenden Aufnahmeraum für einen Rohrabschnitt, einer den Aufnahmeraum umschließenden Wärmedämmschicht aus festem Isolationswerkstoff, einer äußeren Schutzverkleidung, einer zwischen der Wärmedämmschicht und der äußeren Schutzverkleidung angeordneten Dampfsperre, mindestens zwei, das Rohrlager umgreifenden, teilkreisförmigen Lagerschalen, die durch Spannschrauben miteinander verbunden sind, wobei die untere Lagerschale mit der das Rohrlager tragenden Basis in Verbindung steht, sowie einer axialen Fixierung der Lagerteile relativ zu den Lagerschalen.

Bei Cryogenetik-Rohrleitungssystemen, die z.B. Flüssiggase transportieren, werden derartige kälteisolierte Rohrlager eingesetzt, die aufgrund der großen Temperaturdehnungen der Rohrleitung auf dem Untergrund, beispielsweise Stahlbau, gleiten müssen. Damit die Reibkraft der Aufstandsfläche überwunden wird, muss die Kraft von der Rohrleitung durch die Wärmedämmschicht in die äußeren, aus Metall bestehenden Lagerschalen und somit auf die Basis übertragen werden.

Bekannte kälteisolierte Rohrlager (DE 10 2009 008 140 A1 und DE 10 2005 013 728 A1) haben sich zwar in der Praxis bestens bewährt, jedoch kann es bei den bekannten Rohrlagern unter extremen Bedingungen, insbesondere bei sehr großen Temperaturdehnungen, dazu führen, dass die Wärmedämmschicht derart stark belastet wird, dass Beschädigungen des Rohrlagers auftreten, denn die Werkstoffpaarungen Isolierschaum/Dampfsperre und/oder Dampfsperre/Schutzverkleidung können die notwendigen Kräfte nicht übertragen, sodass sich der innere Teil das Rohrlagers relativ zu den äußeren Lagerschalen verschiebt und die Dampfsperre reißt. Üblicherweise wird versucht, die notwendige Kraft durch Reibung zu übertragen, jedoch werden dann sehr hohe Anpresskräfte benötigt, die durch die Verschraubung der Lagerschalen erzeugt werden müssen. Da auch die Wärmedämmschicht einer Temperaturdehnung unterworfen ist, sind häufig die Verschraubungen der Lagerschalen mit Tellerfedern ausgerüstet, um die Durchmesseränderungen auszugleichen. Allein diese Maßnahme reicht aber unter extremsten Bedingungen häufig nicht aus.

Der Erfindung liegt daher die Aufgabe zugrunde, ein kälteisoliertes Rohrlager zu schaffen, welches selbst unter extremsten Bedingungen keine Beschädigungen erleidet und selbst bei größten Temperaturdehnungen der Rohrleitung seine Funktion voll erfüllt.

Erfindungsgemäß wird diese Aufgabe dadurch gelöst, dass die Lagerschalen an beiden Lagerenden in Axialrichtung kürzer ausgebildet sind als die übrigen Lagerteile, wobei ein freier Lagerabschnitt verbleibt, der nicht von den Lagerschalen überdeckt ist, dass im Bereich der beidseitigen freien Lagerabschnitte Anlageelemente vorgesehen sind, die unmittelbar an den Stirnenden der Lagerschalen anliegen, und dass die Anlageelemente mit Hilfe von radial eingedrehten Kopfschrauben fixiert sind, die durch die Schutzverkleidung und die Dampfsperre hindurch in der festen Wärmedämmschicht verankert sind.

Mit Hilfe der erfindungsgemäßen Konstruktion wird die Wärmedämmschicht weniger belastet, sodass nahezu keine Relativbewegungen zwischen den Lagerschalen und der Wärmedämmschicht auftreten. Diese positive Wirkung stellt sicher, dass eine dauerhaft hermetisch geschlossene Dampfsperre gewährleistet ist, sodass auch in dieser Hinsicht durch die erfindungsgemäße Konstruktion ein äußerst positiver Effekt erzielt wird.

Die Anlageelemente können als in Abständen angeordnete Metallklötze ausgebildet sein, die jeweils mit mindestens einer Schraube befestigt sind. Bei einem bevorzugten Ausführungsbeispiel werden die Metallklötze etwas länger ausgebildet und mit jeweils zwei in Axialrichtung hintereinander angeordneten Schrauben befestigt, sodass eine optimale Stabilität erzielt wird.

Alternativ können die Anlageelemente auch als teilkreisförmig gestaltete Metallteile ausgebildet sein, die sich entlang des Kreisbogens der jeweiligen Lagerschalen erstrecken und mit einer Mehrzahl von in Abständen eingedrehten Schrauben befestigt sind.

Eine besonders stabile Anordnung wird dadurch erzielt, dass die teilkreisförmig gestalteten Metallteile etwas breiter ausgebildet sind und mit jeweils mindestens zwei in Axialrichtung hintereinander angeordneten Reihen von Schrauben befestigt sind, wobei die Schrauben der unterschiedlichen Reihen in Umfangsrichtung relativ zueinander versetzt sein können.

Als Material für die Wärmedämmschicht wird normalerweise HD-Schaum, beispielsweise Polyurethan-Hartschaum, verwendet. Es kommt daher darauf an, die in die Wärmedämmschicht einzudrehenden Schrauben fest darin zu verankern. Vorzugsweise werden die Schrauben daher in Dübel eingeschraubt, die in die Wärmedämmschicht eingebracht werden.

Als Dübel eignen sich beispielsweise handelsübliche Kunststoffschraubdübel, die eine gute Verankerungsmöglichkeit bieten.

Zum Einsetzen der Dübel werden vorgebohrte Sacklöcher angebracht, die zweckmäßig als abgesetzte Stufenbohrungen ausgebildet sind.

Bei der Montage werden die Sacklöcher vor dem Einbringen der Dübel zumindest teilweise mit einer Klebemasse gefüllt, sodass ein optimaler Sitz der Dübel in der Wärmedämmschicht erzielt wird. Darüber hinaus werden zweckmäßig die Dübel vor dem Eindrehen der Schrauben ihrerseits zumindest teilweise mit einer Klebemasse gefüllt, um den Sitz der Schrauben noch fester und zuverlässiger zu gestalten.

Vorzugsweise werden Dübel mit tellerförmigen Köpfen verwendet, die im eingesetzten Zustand der Dübel außen auf der Schutzverkleidung aufliegen.

Um einen optimalen Sitz der Anlageelemente zu erzielen, können diese an ihren dem Rohrlager zugewandten Unterseiten rund um die Schraubenlöcher herum mit zylindrischen Ansenkungen versehen sein, die die tellerförmigen Köpfe der Dübel übergreifen.

Um die Dampfsperre auch bei extremen Situationen aufrechterhalten zu können, kann bei der Montage zwischen den Köpfen der Schrauben und der Schutzverkleidung sowie zwischen den Anlageelementen und der Schutzverkleidung ein Klebstoff eingebracht werden, der die Dichtheit der Dampfsperre optimal beeinflusst.

Die erfindungsgemäße Konstruktion weist überdies den Vorteil auf, dass sie bei bekannten im Einsatz befindlichen Rohrlagern auch nachgerüstet werden kann. Dazu ist es erforderlich, dass ein Abdeckblech zum Anschluss an die Außenhaut der Rohrisolierung vorgesehen ist, wobei das Abdeckblech die Schutzverkleidung des Rohrlagers teilweise überlappt. Bei einer solchen Umrüstaktion greifen die Dübel und Schrauben vorzugsweise auch durch das Abdeckblech hindurch.

Die Erfindung ist in der Zeichnung beispielhaft veranschaulicht und im Nachstehenden im Einzelnen anhand der Zeichnung beschrieben. Es zeigen:
- Fig. 1:: die Stirnansicht eines ersten Ausführungsbeispiels des erfindungsgemäßen Rohrlagers,
- Fig. 2:: eine Seitenansicht in Richtung des Pfeiles II aus Fig. 1,
- Fig. 3:: das Rohrlager gemäß Fig. 1 und 2 in perspektivischer Darstellung,
- Fig. 4:: die gleiche perspektivische Ansicht wie Fig. 3 einer abgewandelten Ausführungsform,
- Fig. 5:: die Stirnansicht eines weiteren Ausführungsbeispiels des erfindungsgemäßen Rohrlagers,
- Fig. 6:: eine Seitenansicht des Rohrlagers gemäß Fig. 5 in Richtung des Pfeiles VI,
- Fig. 7:: das Rohrlager gemäß Fig. 5 und 6 in perspektivischer Darstellung,
- Fig. 8:: die gleiche perspektivische Darstellung wie Fig. 7 eines abgewandelten Ausführungsbeispiels des Rohrlagers gemäß Fig. 5 bis 7,
- Fig. 9:: in stark vergrößerter Darstellung einen Schnitt entlang der Linie IX-IX aus Fig. 1 und
- Fig. 10:: den gleichen Schnitt wie in Fig. 9 für eine Nachrüstung eines herkömmlichen Rohrlagers

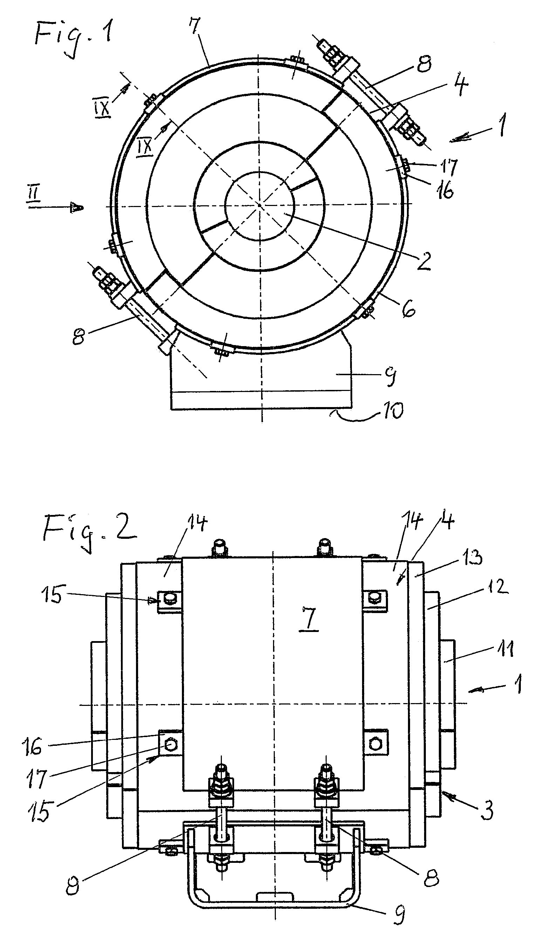

In Fig. 1 bis 3 der Zeichnung ist ein erstes Ausführungsbeispiel eines kälteisolierten Rohrlagers 1 dargestellt, welches zur Halterung einer Tieftemperaturrohrleitung vorgesehen ist. Das Rohrlager 1 weist in seinem Zentrum einen Aufnahmeraum 2 für einen Rohrabschnitt auf, wobei der Aufnahmeraum 2 von einer Wärmedämmschicht 3 aus festem Isolationswerkstoff umgeben ist. Als Isolationswerkstoff wird in der Regel HD-Schaum, insbesondere Polyurethan-Hartschaum, verwendet.

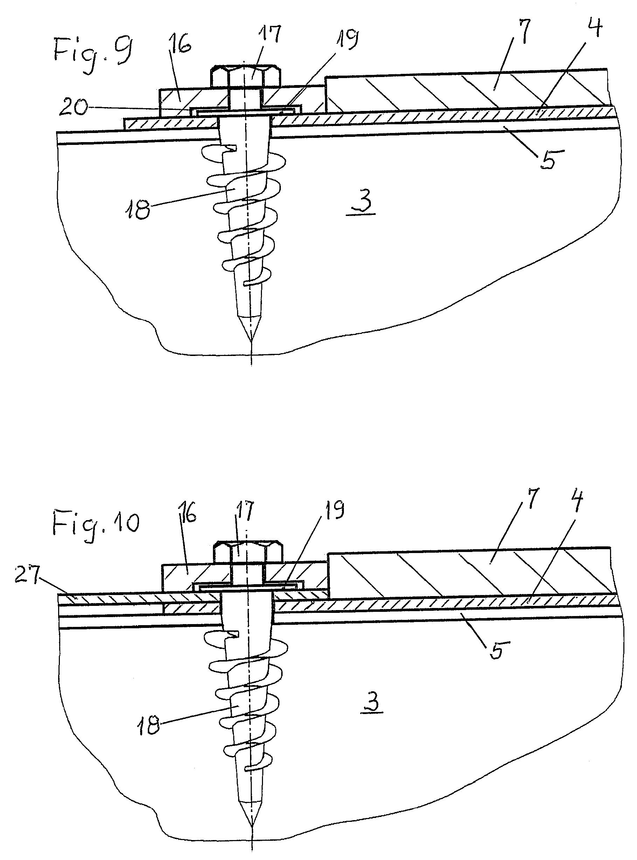

Wie insbesondere aus dem vergrößerten Ausschnitt gemäß Fig. 9 hervorgeht, ist die Wärmedämmschicht 3 von einer äußeren Schutzverkleidung 4 umgeben, die vorzugsweise aus Metallblech besteht. Zwischen der Wärmedämmschicht 3 und der Schutzverkleidung 4 ist eine Dampfsperre 5 vorgesehen.

Dieser Aufbau ist von zwei teilkreisförmigen Lagerschalen 6 und 7 umgeben, die nahezu halbkreisförmig ausgebildet sind. Die Lagerschalen 6 und 7 werden mittels Schraubverbindungen 8 gegen den Lageraufbau gedrückt, sodass dadurch eine kompakte Einheit entsteht. Die Schraubverbindungen 8 sind dabei mit Tellerfedern ausgerüstet, um eventuelle Ausdehnungen und Schrumpfungen des Lageraufbaus aufzunehmen.

Die untere Lagerschale 6 ist fest mit einem Basisteil 9 verbunden, wobei die beiden Teile, da sie vorzugsweise aus Stahl bestehen, miteinander verschweißt sind. Die Unterseite 10 des Basisteils 9 kann, sofern es sich bei dem Rohrlager um ein Loslager handelt, frei auf einer glatten Unterlage gleiten.

In den in den Figuren dargestellten Ausführungsbeispielen besteht die Wärmedämmschicht 3 aus drei konzentrisch zueinander angeordneten Schaumstoffhülsen 11, 12, 13, die formschlüssig ineinander sitzen und jeweils mittig geteilt sind, wobei die Teilschnitte relativ zueinander versetzt sind. Die einzelnen Schaumstoffhülsen 11, 12, 13 können unterschiedliche Dichten haben, wobei die innere Hülse 11, die unmittelbar mit dem zu isolierenden Rohr in Verbindung steht, die höchste Dichte aufweist. Die freien Zylinder- und Stirnflächen der drei Schaumstoffhülsen 11, 12, 13 sind versiegelt, damit für eine ausreichende Dampfsperre gesorgt ist. Alternativ können die beiden äußeren Schaumstoffhülsen 12, 13 auch gemeinsam aus einem Stück gefertigt sein.

Die Lagerschalen 6, 7 sind an beiden Lagerenden in Axialrichtung kürzer ausgebildet als die übrige Lagerteile, wobei auf beiden Seiten des Rohrlagers 1 auf der Schutzverkleidung 4 ein freier Lagerabschnitt 14 verbleibt, der nicht von den Lagerschalen 6, 7 überdeckt ist. Im Bereich der beidseitigen freien Lagerabschnitte 14 sind Anlageelemente 15 vorgesehen, die unmittelbar an den Stirnenden der Lagerschalen 6, 7 anliegen. Bei dem in Fig. 1 bis 3 dargestellten Ausführungsbeispiel sind die Anlageelemente 15 als in Abständen angeordnete Metallklötze 16 ausgebildet, die mit Hilfe von radial eingedrehten Kopfschrauben 17 fixiert sind. Wie insbesondere aus Fig. 9 hervorgeht, sind die Kopfschrauben 17 durch die Schutzverkleidung 4 und die Dampfsperre 5 hindurch in der Wärmedämmschicht 3 verankert.

Nach der Detailansicht gemäß Fig. 9 sind die Schrauben 17 in Dübel 18 eingeschraubt, die zuvor in die Wärmedämmschicht 3 eingebracht worden sind. Als Dübel 18 können handelsübliche Kunststoffschraubdübel verwendet werden, die mit tellerförmigen Köpfen 19 versehen sind.

Zum Einsetzen der Dübel 18 werden Sacklöcher vorgebohrt, die zweckmäßig als abgesetzte Stufenbohrungen ausgebildet sind. Vor dem Einbringen der Dübel 18 in die Sacklöcher werden diese zumindest teilweise mit einer Klebemasse gefüllt, um den Sitz der Dübel in den Sacklöchern zu optimieren.

Bevor die Schrauben 17 in die Dübel 18 eingedreht werden, werden auch die Dübel 18 zumindest teilweise mit einer Klebemasse gefüllt, sodass auch der Sitz der Schrauben in den Dübeln optimiert ist.

Wie insbesondere aus Fig. 9 hervorgeht, liegen die tellerförmigen Köpfe 19 der Dübel 18 außen auf der Schutzverkleidung 4 auf und erstrecken sich durch die Schutzverkleidung 4 sowie die Dampfsperre 5 hindurch in die Wärmedämmschicht 3.

Die Metallklötze 16 sind an ihren dem Rohrlager 1 zugewandten Unterseiten rund um die Schraubenlöcher herum mit zylindrischen Ansenkungen 20 versehen, die die tellerförmigen Köpfe 19 der Dübel 18 übergreifen.

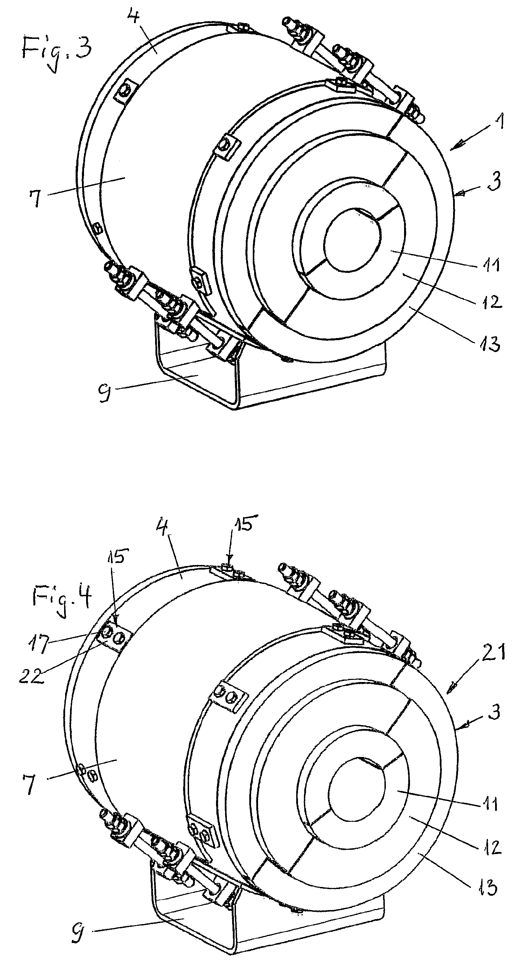

In Fig. 4 ist ein Rohrlager 21 dargestellt, welches im Wesentlichen die gleichen Merkmale wie das in Fig. 1 bis 3 dargestellte erste Ausführungsbeispiel aufweist. Gleiche Bauteile sind demgemäß mit denselben Positionszahlen gekennzeichnet. Der einzige Unterschied besteht darin, dass die Metallklötze 22 in Axialrichtung des Rohrlagers 21 länglich ausgebildet sind und dass diese Metallklötze 22 mit jeweils zwei in Axialrichtung hintereinander angeordneten Kopfschrauben 17 befestigt sind. Durch diese Maßnahme wird die Stabilität des Rohrlagers 21 gegenüber dem Rohrlager 1 noch etwas verbessert.

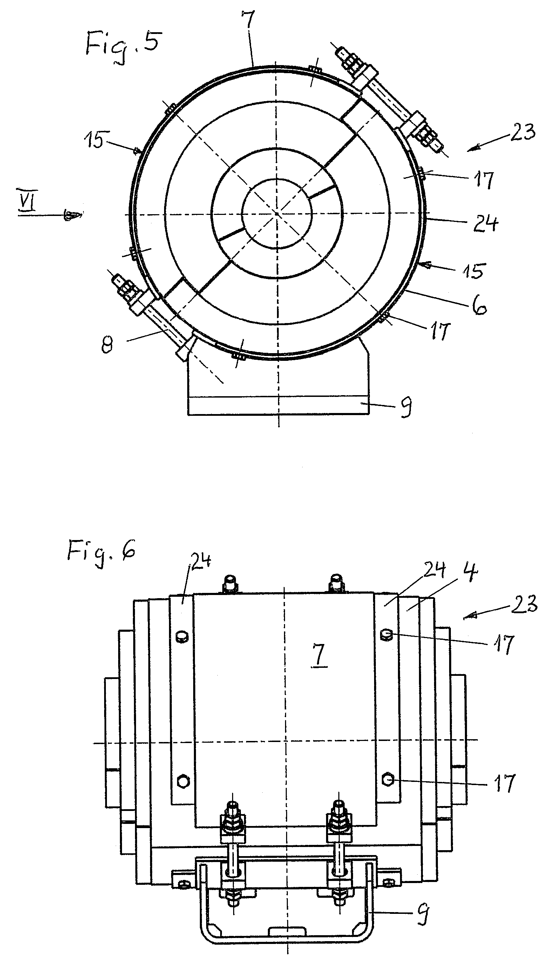

In Fig. 5 bis 7 ist ein drittes Ausführungsbeispiel eines Rohrlagers 23 dargestellt, welches bis auf die Anlageelemente 15 identisch mit den in Fig. 1 bis 4 dargestellten Ausführungsbeispielen gestaltet ist. Die Anlageelemente 15 sind bei diesem Ausführungsbeispiel als teilkreisförmig gestaltete Metallteile 24 ausgebildet, die sich entlang des Kreisbogens der jeweiligen Lagerschalen 6, 7 erstrecken und mit einer Mehrzahl von in Abständen eingedrehten Kopfschrauben 17 befestigt sind. Mit Hilfe dieser teilkreisförmig gestalteten Metallteile 24 erhalten die axialen Stirnflächen der Lagerschalen 6, 7 eine durchgehende Anlage. Bei dem in Fig.

5 bis 7 dargestellten Ausführungsbeispiel erstrecken sich die jeweiligen Anlageelemente 15, um nahezu den gesamten stirnseitigen Kreisbogen der jeweiligen Lagerschale 6 bzw. 7. Die Kopfschrauben 17 sind dabei ebenso wie bei der Detailansicht gemäß Fig. 9 in entsprechende Schraubdübel 18 eingedreht.

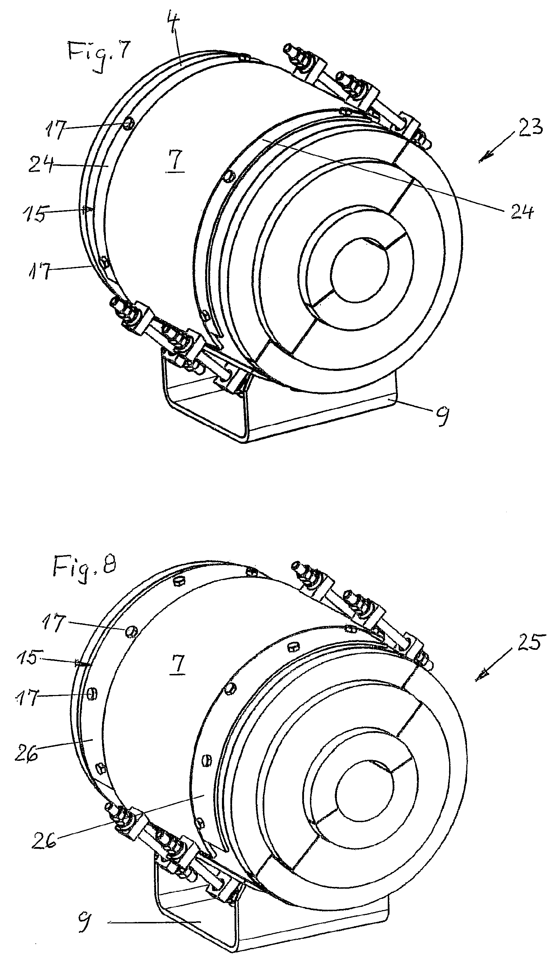

Fig. 8 zeigt eine Variante des in Fig. 5 bis 7 dargestellten Ausführungsbeispiels. Gemäß Fig. 8 sind bei diesem Rohrlager 25 die Anlageelemente 15 verstärkt ausgebildet, und zwar sind die teilkreisförmig gestalteten Metallteile 26 etwas breiter ausgebildet als die Metallteile 24 des in Fig. 5 bis 7 dargestellten Ausführungsbeispiels. Diese Metallteile 26 sind mit zwei in Axialrichtung hintereinander angeordneten Reihen von Kopfschrauben 17 befestigt, wobei die Schrauben 17 der unterschiedlichen Reihen in Umfangsrichtung relativ zueinander versetzt angeordnet sind.

Bei allen vier Ausführungsbeispielen muss darauf geachtet werden, dass die Dampfsperre 5 selbst bei extremen Belastungen aufrechterhalten bleibt. Zu diesem Zweck sind zwischen den Köpfen der Schrauben 17 und der Schutzverkleidung 4 einerseits sowie zwischen den Anlageelementen 15 und der Schutzverkleidung 4 andererseits eine Klebstoffschicht vorgesehen, die zur Integrität des Aufbaus dient, damit eine hermetisch geschlossene Dampfsperre entsteht.

Herkömmliche bekannte Rohrlager können ohne weiteres auf den neuen, oben beschriebenen Standard umgerüstet werden.

Dazu ist es erforderlich, dass, wie in Fig. 10 dargestellt, zusätzliches ein Abdeckblech 27 zum Anschluss an die Außenhaut der Rohrisolierung angebracht wird. Das Abdeckblech 27 überlappt dabei teilweise die Schutzverkleidung 4, sodass die Schrauben 17 auch durch das Abdeckblech 27 hindurchgreifen, um dieses an dem jeweiligen Rohrlager zu befestigen. Auch die Dübel 18 erstrecken sich bei diesem Ausführungsbeispiel durch das Abdeckblech 27 hindurch, wobei die tellerförmigen Köpfe 19 der Dübel 18 im montierten Zustand auf der Oberseite des Abdeckblechs 27 aufliegen. Eine Umrüstung von herkömmlichen kälteisolierten Rohrlagern auf den neuen Standard ist somit ohne weiteres und mit geringem technischem Aufwand möglich.

### Bezugszeichenliste

- 1: Rohrlager
- 2: Aufnahmeraum
- 3: Wärmedämmschicht
- 4: Schutzverkleidung
- 5: Dampfsperre
- 6: Lagerschale
- 7: Lagerschale
- 8: Schraubverbindungen
- 9: Basisteil
- 10: Unterseite des Basisteils
- 11: Schaumstoffhülse
- 12: Schaumstoffhülse
- 13: Schaumstoffhülse
- 14: freier Lagerabschnitt
- 15: Anlageelemente
- 16: Metallklötze
- 17: Kopfschrauben
- 18: Dübel
- 19: tellerförmige Köpfe
- 20: Ansenkungen
- 21: Rohrlager
- 22: Metallklötze
- 23: Rohrlager
- 24: teilkreisförmig gestaltete Metallteile
- 25: Rohrlager
- 26: teilkreisförmig gestaltete Metallteile
- 27: Abdeckblech

## Patentansprüche

1. Kälteisoliertes Rohrlager für eine Rohrleitung, insbesondere für eine Tieftemperaturrohrleitung, mit einem dem Querschnitt der Rohrleitung angepassten, durchgehenden Aufnahmeraum (2) für einen Rohrabschnitt, einer den Aufnahmeraum (2) umschließenden Wärmedämmschicht (3) aus festem Isolationswerkstoff, einer äußeren Schutzverkleidung (4), einer zwischen der Wärmedämmschicht (3) und der äußeren Schutzverkleidung (4) angeordneten Dampfsperre (5), mindestens zwei, das Rohrlager (1; 21; 23; 25) umgreifenden, teilkreisförmigen Lagerschalen (6, 7), die durch Spannschrauben (8) miteinander verbunden sind, wobei die untere Lagerschale (6) mit der das Rohrlager tragenden Basis (9) in Verbindung steht, sowie einer axialen Fixierung der Lagerteile relativ zu den Lagerschalen (6, 7), **dadurch gekennzeichnet, dass** die Lagerschalen (6, 7) an beiden Lagerenden in Axialrichtung kürzer ausgebildet sind als die übrigen Lagerteile, wobei ein freier Lagerabschnitt (14) verbleibt, der nicht von den Lagerschalen (6, 7) überdeckt ist, dass im Bereich der beidseitigen freien Lagerabschnitte (14) Anlageelemente (15) vorgesehen sind, die unmittelbar an den Stirnenden der Lagerschalen (6, 7) anliegen, und dass die Anlageelemente (15) mit Hilfe von radial eingedrehten Kopfschrauben (17) fixiert sind, die durch die Schutzverkleidung (4) und die Dampfsperre (5) hindurch in der festen Wärmedämmschicht (3) verankert sind.

2. Kälteisoliertes Rohrlager nach Anspruch 1, **dadurch gekennzeichnet, dass** die Anlageelemente (15) als in Abständen angeordnete Metallklötze ausgebildet sind, die jeweils mit mindestens einer Schraube befestigt sind.

3. Kälteisoliertes Rohrlager nach Anspruch 2, **dadurch gekennzeichnet, dass** die Metallklötze (16; 22) mit jeweils zwei in Axialrichtung hintereinander angeordneten Kopfschrauben (17) befestigt sind.

4. Kälteisoliertes Rohrlager nach Anspruch 1, **dadurch gekennzeichnet, dass** die Anlageelemente (15) als teilkreisförmig gestaltete Metallteile (24; 26) ausgebildet sind, die sich entlang des Kreisbogens der jeweiligen Lagerschalen (6, 7) erstrecken und mit einer Mehrzahl von in Abständen eingedrehten Kopfschrauben (17) befestigt sind.

5. Kälteisoliertes Rohrlager nach Anspruch 4, **dadurch gekennzeichnet, dass** die teilkreisförmig gestalteten Metallteile (26) mit jeweils mindestens zwei in Axialrichtung hintereinander angeordneten Reihen von Kopfschrauben (17) befestigt sind und dass die Kopfschrauben (17) der unterschiedlichen Reihen in Umfangsrichtung relativ zueinander versetzt sind.

6. Kälteisoliertes Rohrlager nach einem der Ansprüche 1 bis 5, **dadurch gekennzeichnet, dass** die Schrauben (17) in Dübel (18) eingeschraubt sind, die in der Wärmedämmschicht (3) verankert sind.

7. Kälteisoliertes Rohrlager nach Anspruch 6, **dadurch gekennzeichnet, dass** die Dübel (18) als Kunststoffschraubdübel (18) ausgebildet sind.

8. Kälteisoliertes Rohrlager nach Anspruch 6 oder 7,
**dadurch gekennzeichnet, dass** zum Einsetzen der Dübel (18) vorgebohrte Sacklöcher vorgesehen sind.

9. Kälteisoliertes Rohrlager nach Anspruch 8, **dadurch gekennzeichnet, dass** die Sacklöcher als abgesetzte Stufenbohrungen ausgebildet sind.

10. Kälteisoliertes Rohrlager nach einem der Ansprüche 1 bis 9, **dadurch gekennzeichnet, dass** die Sacklöcher vor dem Einbringen der Dübel (18) zumindest teilweise mit einer Klebemasse gefüllt sind.

11. Kälteisoliertes Rohrlager nach einem der Ansprüche 6 bis 10, **dadurch gekennzeichnet, dass** die Dübel (18) vor dem Eindrehen der Schrauben (17) zumindest teilweise mit einer Klebemasse gefüllt sind.

12. Kälteisoliertes Rohrlager nach einem der Ansprüche 7 bis 11, **dadurch gekennzeichnet, dass** die Dübel (18) tellerförmige Köpfe (19) aufweisen, die im eingesetzten Zustand der Dübel (18) auf der Schutzverkleidung (4) aufliegen.

13. Kälteisoliertes Rohrlager nach Anspruch 12, **dadurch gekennzeichnet, dass** die Anlageelemente (15) an ihren dem Rohrlager zugewandten Unterseiten rund um die Schraubenlöcher herum mit zylindrischen Ansenkungen versehen sind, die die tellerförmigen Köpfe der Dübel (18) übergreifen.

14. Kälteisoliertes Rohrlager nach einem der Ansprüche 1 bis 13, **dadurch gekennzeichnet, dass** zwischen den Köpfen der Schrauben (17) und der Schutzverkleidung (4) sowie zwischen den Anlageelementen (15) und der Schutzverkleidung (4) eine Klebstoffschicht vorgesehen ist.

15. Kälteisoliertes Rohrlager nach einem der vorhergehenden Ansprüche, insbesondere zur Umrüstung herkömmlicher Rohrlager, **dadurch gekennzeichnet, dass** ein Abdeckblech (27) zum Anschluss an die Außenhaut der Rohrisolierung vorgesehen ist, dass das Abdeckblech (27) die Schutzverkleidung (4) des Rohrlagers teilweise überlappt und dass die Dübel (18) und Schrauben (17) auch durch das Abdeckblech (27) hindurchgreifen.

## Claims

1. A cold-insulated pipe support for a pipeline, in particular for a low-temperature pipeline, comprising a receiving space (2) for a pipe portion, which receiving space passes through the pipe support and is adapted to the cross-section of the pipeline, a heat insulating layer (3) of solid insulating material, that surrounds the receiving space (2), an outer protective casing (4), a vapor barrier (5) arranged between the heat insulating layer (5) and the outer protective casing (4), at least two part-circular support shells (6, 7) which embrace the pipe support (1; 21; 23; 25) and which are connected together by clamping screws (8), wherein the lower support shell (6) is connected to the base (9) carrying the pipe support, as well as an axial fixing of the support portions relative to the support shells (6, 7), **characterised in that** the support shells (6, 7) are of a shorter configuration at both support ends in the axial direction than the other support portions, wherein there remains a free support portion (14) which is not covered by the support shells (6, 7), provided in the region of the free support portions (14) at the two ends are contact elements (15) which bear directly against the ends of the support shells (6, 7), and the contact elements (15) are fixed by means of radially screwed-in headed screws (17) which are anchored through the protective casing (4) and the vapor barrier (5) in the solid heat insulating layer (3).

2. A cold-insulated pipe support as set forth in claim 1 **characterised in that** the contact elements (15) are in the form of spaced metal blocks which are respectively fixed with at least one screw.

3. A cold-insulated pipe support as set forth in claim 2 **characterised in that** the metal blocks (16; 22) are fixed with two respective headed screws (17) arranged in succession in the axial direction.

4. A cold-insulated pipe support as set forth in claim 1 **characterised in that** the contact elements (15) are in the form of part-circular metal portions (24; 26) which extend along the circular arc of the respective support shells (6, 7) and are fixed with a plurality of headed screws (17) which are screwed in at spacings.

5. A cold-insulated pipe support as set forth in claim 4 **characterised in that** the part-circular metal portions (26) are fixed with at least two respective rows, arranged in succession in the axial direction, of headed screws (17) and the headed screws (17) of the different rows are displaced relative to each other in the peripheral direction.

6. A cold-insulated pipe support as set forth in one of claims 1 through 5 **characterised in that** the screws (17) are screwed into dowels (18) anchored in the heat insulating layer (3).

7. A cold-insulated pipe support as set forth in claim 6 **characterised in that** the dowels (18) are in the form of plastic screw dowels (18).

8. A cold-insulated pipe support as set forth in claim 6 or claim 7 **characterised in that** there are provided predrilled blind holes for insertion of the dowels (18).

9. A cold-insulated pipe support as set forth in claim 8 **characterised in that** the blind holes are in the form of stepped bores.

10. A cold-insulated pipe support as set forth in one of claims 1 through 9 **characterised in that** the blind holes are at least partially filled with an adhesive material prior to introduction of the dowels (18).

11. A cold-insulated pipe support as set forth in one of claims 6 through 10 **characterised in that** the dowels (18) are at least partially filled with an adhesive material before the screws (17) are screwed in.

12. A cold-insulated pipe support as set forth in one of claims 7 through 11 **characterised in that** the dowels (18) have plate-shaped heads (19) which in the inserted condition of the dowels (18) bear against the protective casing (4).

13. A cold-insulated pipe support as set forth in claim 12 **characterised in that** at their undersides towards the pipe support the contact elements (15) are provided around the screw holes with cylindrical countersunk portions which engage over the plate-shaped heads of the dowels (18).

14. A cold-insulated pipe support as set forth in one of claims 1 through 13 **characterised in that** an adhesive layer is provided between the heads of the screws (17) and the protective casing (4) and between the contact elements (15) and the protective casing (4).

15. A cold-insulated pipe support as set forth in one of the preceding claims, in particular for retro-fitting of conventional pipe supports, **characterised in that** there is provided a cover plate (27) for connection to the outer skin of the pipe insulation, the cover plate (27) partially overlaps the protective casing (4) of the pipe support and the dowels (18) and screws (17) also engage through the cover plate (27).

## Revendications

1. Support de tuyau isolé du froid pour une conduite, notamment pour une conduite à basse température, comprenant un espace de logement continu (2) pour une partie de tuyau, une couche d'isolation thermique (3) en matériau d'isolation solide entourant ledit espace de logement (2), un revêtement protecteur extérieur (4), un pare-vapeur (5) disposé entre la couche d'isolation thermique (3) et ledit revêtement protecteur extérieur (4), au moins deux coquilles de support (6,7) en forme de cercle partiel entourant le support de tuyau (1; 21; 23; 25), coquilles de support qui sont reliées entre eux à l'aide des vis de fixation (8), la coquille de support inférieure (6) étant en liaison avec la base (9) supportant le support de tuyau, et une fixation des éléments de support par rapport aux coquilles de support (6,7), **caractérisé en ce que**, dans la direction axiale, les coquilles de support (6, 7) aux deux extrémités du support sont réalisées plus courtes que les autres éléments de support, et il reste une partie du support (14) libre qui n'est pas recouverte des coquilles de support (6, 7), que dans la zone des deux parties de support (14) libres sont prévus des éléments d'appui (15) appuyant directement sur les extrémités frontales des coquilles de support (6, 7), et que les éléments d'appui (15) sont fixés à l'aides des vis à tête (17) vissés dans lesdits éléments, vis à tête qui sont ancrés dans la couche d'isolation thermique (3) solide à travers du revêtement protecteur (4) et le pare-vapeur (5).

2. Support de tuyau isolé du froid selon la revendication 1, **caractérisé en ce que** les éléments d'appui (15) sont réalisés sous la forme de bloc métalliques disposés à intervalles et fixés chacun à l'aide d'au moins un vis.

3. Support de tuyau isolé du froid selon la revendication 2, **caractérisé en ce que** les blocs métalliques (16; 22) sont fixes à l'aide des deux vis à tête (17) disposés l'un derrière l'autre dans la direction axiale.

4. Support de tuyau isolé du froid selon la revendication 1, **caractérisé en ce que** les éléments d'appui (15) sont réalisés sous la forme d'éléments métalliques (24; 26) en forme de cercle partiel s'étendant le long de l'arc de cercle des coquilles de support (6, 7) respectives et étant fixés à l'aide d'une pluralité de vis à tête (17) vissés à intervalles.

5. Support de tuyau isolé du froid selon la revendication 4, **caractérisé en ce que** les éléments métalliques (26) en forme de cercle partiel sont respectivement fixés à l'aide d'au moins deux vis à tête (17) disposés en rangées l'une arrangée derrière l'autre et que les vis à tête (17) des rangées différentes sont mutuellement décalés dans la direction circonférentielle.

6. Support de tuyau isolé du froid selon l'une des revendications 1 à 5, **caractérisé en ce que** les vis (17) sont vissés dans des chevilles (18) ancrées dans la couche d'isolation thermique (3).

7. Support de tuyau isolé du froid selon la revendication 6, **caractérisé en ce que** les chevilles (18) sont réalisées sous la forme de vis cheville (18) en matière plastique.

8. Support de tuyau isolé du froid selon la revendication 6 ou 7, **caractérisé en ce que**, pour insérer les chevilles (18), il sont prévus des trous borgnes préalablement percés.

9. Support de tuyau isolé du froid selon la revendication 8, **caractérisé en ce que** les trous borgnes sont réalisés sous la forme d'alésages étagés.

10. Support de tuyau isolé du froid selon l'une des revendications 1 à 9, **caractérisé en ce qu'**avant l' insertion des chevilles (18), les trous de borgnes sont remplis d'une masse adhésive, au moins en partie.

11. Support de tuyau isolé du froid selon l'une des revendications 6 à 10, **caractérisé en ce qu'**avant l'insertion des vis (17), les chevilles (18) sont remplies d'une masse adhésive.

12. Support de tuyau isolé du froid selon l'une des revendications 7 à 11, **caractérisé en ce que** les chevilles (18) présentent des têtes (19) en forme de coupelle qui reposent, dans l'état installé des chevilles (18), sur le revêtement protecteur (4).

13. Support de tuyau isolé du froid selon la revendication 12, **c a r a c t é r i s é** en ce que les éléments d'appui (15) sur leur côtés inférieurs tournés vers le support de tuyau et autour des trous de vis sont munis des chanfreins cylindriques chevauchant les têtes en forme de coupelle des chevilles (18).

14. Support de tuyau isolé du froid selon l'une des revendications 1 à 13, **c a r a c t é r i s é** en ce qu'entre les têtes des vis (17) et le revêtement protecteur (4) ainsi qu'entre les éléments d'appui (15) et le revêtement protecteur (4) est prévue une couche adhésive.

15. Support de tuyau isolé du froid selon l'une des revendications précédentes, notamment pour modifier des supports de tuyau conventionnels, **caractérisé en ce qu'**est prévue une tôle de recouvrement (27) pour le raccordement à l'enveloppe externe de l'isolation de tuyau, que la tôle de recouvrement (27) chevauche le revêtement protecteur (4) du support de tuyau au moins en partie et que les chevilles (18) et les vis (17) aussi traversent la tôle de recouvrement (27).
